# EUROPEAN PATENT APPLICATION

(11) **EP 2 704 028 A1**
(43) Date of publication of application: **05.03.2014**
(21) Application number: 12182689.5
(22) Date of filing: 31.08.2012
(51) Int. Cl.: G06F 17/30

(54) **Migration of tags across entities in management of personal electronically encoded items**

(71) Applicant: BlackBerry Limited, Waterloo, ON N2K 0A7 (CA)
(72) Inventor: Oka, Anand Ravindra, Waterloo, ON N2L 3W8 (CA); Simmons, Sean Bartholomew, Waterloo, ON N2L 3W8 (CA); Snow, Christopher Harris, Waterloo, ON N2L 3W8 (CA); Hanov, Steven Michael, Waterloo, ON N2V 2X9 (CA); Naddafzadeh Shirazi, Ghasem, Vancouver, BC V6T 1Z4 (CA)
(74) Representative: Fennell, Gareth Charles

(57) **Abstract**

A method **[900]**, performed on an electronic device **[105]** for migrating tags **[310]** across entities **[810].** The migration of the tags **[310]** is performed following an analysis of one or more personal electronically encoded items **[190]** associated with a previously created perspective **[410]** or album **[420]** associated with the previously created perspective **[410],** responsive to a user **[160]** decision the creation of a new perspective **[410],** a new album **[420]** associated with one of the previously created perspectives **[410]**, or a new perspective **[410]** and a new album **[420]** associated with the new perspective **[410],** responsive to a user **[160]** decision to treat the previously created perspective **[410]** or album **[420]** as an individual entity **[810]**, and association of the previously created perspective **[410]** or album **[420]** with the new perspective **[410]** or new album **[420].** The tags **[310]** are respectively migrated from the new perspective **[410]** or the new album **[420]** to the associated previously created perspective **[410]** or the previously created album **[420]** and to associated ones of the one or more personal electronically encoded items **[190].**

## Description

### FIELD OF THE INVENTION

The present invention relates generally to managing and arranging personal items on an electronic device, and more particularly, to the migration of tags in the management and arrangement of such electronically encoded items.

### BACKGROUND

In a known approach similar to that of a filing system, search techniques using keywords, including internet keyword searches, are often employed to group related electronically encoded items such as textual documents, photographs, and web pages.

In the filing system approach, distinct folders are first created for those categories of interest. Then the various electronically encoded items are manually partitioned into the folders. In an alternative to the filing system, the electronically encoded items are left as a single group but with appropriate textual keywords attached to individual electronically encoded items. To collect a related group of electronically encoded items, a search utilizing a keyword of interest is then performed. In some cases, it is necessary to manually create and associate keywords to the electronically encoded items.

In contrast to the keyword search an internet keyword search involves two distinct stages. First a keyword search is made for the occurrence of specified keywords in the objects of the search, i.e., the web pages on the internet. In the second stage of the internet search, web pages associated with the specified keywords are ranked according to predetermine criteria. The frequency with which other web pages hyper-link to the page under consideration is often used as a criterion for ranking a web page. In using this criterion, it is assumed that an "important" web page will usually have numerous other pages "pointing" to it. This criterion has proven to be very informative. An internet search using it is often successful in parsing out the few web pages that are really relevant even when keyword queries are sparse or non-specific.

### BRIEF DESCRIPTION OF THE DRAWINGS

The accompanying drawings provide visual representations which will be used to more fully describe various representative embodiments and can be used by those skilled in the art to better understand the representative embodiments disclosed herein and their inherent advantages. In these drawings, like reference numerals identify corresponding elements.

Figure 1 is a block diagram of a system for clustering personal electronically encoded items as described in various representative embodiments.

Figure 2 is a flow chart of a method for automatic tagging as described in various representative embodiments.

Figure 3A is a drawing of a collection of personal electronically encoded items as described in various representative embodiments.

Figure 3B is a drawing of the database containing the multiple personal electronically encoded items of Figure 3A.

Figure 4 is a block diagram of a result of placement by the user of the personal electronically encoded items of Figure 3B.

Figure 5 is a block diagram of two proposals created by the system for the perspectives and albums of Figure 4.

Figure 6 is a flow chart of a method for guided clustering of personal electronically encoded items as described in various representative embodiments.

Figure 7 is a flow chart of a method for the discovery of new concepts and relationships by the system as described in various representative embodiments.

Figure 8 is a block diagram of a result of treating albums of Figure 4 as individual entities.

Figure 9 is a flow chart of a method for the migration of tags as described in various representative embodiments.

### DETAILED DESCRIPTION

As shown in the drawings for purposes of illustration and as described below, novel techniques are disclosed for clustering personalized digital items. In accordance with aspects of the disclosure, an exemplary system includes an adaptive, virtual assistant for managing personal information. The system utilizes an electronic device such as, including but not limited to, a smart-phone, tablet, wireless organizer, personal digital assistant, digital camera, and notebook/desktop computer or the like. An electronic device may be configured to generate a detailed log of the user's actions when manipulating and viewing his/her personal items, and uses such information as "training examples" from which a virtual assistant learns the user's preferences. The virtual assistant then uses this training to further manipulate the personal items and to present the results to the user for his/her acceptance or rejection. Over time, the virtual assistant can take over most of the work of organizing and tagging the personal items for the user in the background, so he/she can quickly retrieve relevant items. The system is so configured as to be capable of organizing and searching personal textual and non-textual electronic items such as photographs, videos, and sound recordings.

The virtual assistant can act somewhat like a human personal assistant who continually observes our interactions with our photos, learns our views, preferences and concepts intimately, and over time performs most of the work of organizing and tagging our photos for us quietly in the background, so we can pull up relevant results quickly whenever we want. For example, if the virtual assistant is requested to retrieve the user's Florida vacation photos, the virtual assistant knows exactly what is being requested. The photos that were taken in Florida on the user's recent family vacation will be retrieved, but excluded will be those taken on a separate business trip. Also retrieved will be photos taken during the two day drive down to Florida and back. Photos taken on the user's smart phone, as well as those taken by various other family members with a digital single lens reflex (SLR) camera can also be included. In addition, given that there may be hundreds of such photos, the virtual assistant will quietly remove photos that seem close duplicates or repetitious or "unimportant" such as photos taken with the lens cap on or out of focus presenting a selection of those photos that will likely be of most interest to the user. The virtual assistant, therefore, can make a number of small but important determinations on the corpus of the user's photos to select a relevant subset in response to the user's request. If the virtual assistant makes a mistake, the user can make a correction which "teaches" the virtual assistant not to repeat that mistake in the future. The user can also request the virtual assistant to also manage all of the user's personal items such as like documents, videos, emails, and music in a similar manner.

The clustering system described herein includes a database stored in memory and configured to enable the following: (1) Creation of new entities, (2) Recall any keyword of any entity, (3) Query of all entities for items having selected attributes, not having those attributes, or having attributes with specified values, (4) registration of "listener" applications that monitor database operations for modification of specific attributes of database entities the detection of which result in the invocation of a supplied "call back" URL with the IDs of certain entities, whenever that attribute is modified of said entities. The clustering system is configured to provide for: (1) the automatic tagging of personal digital items, (2) guided clustering by the user which provides instructions to the virtual assistant as to user preferences, (3) the discovery of new concepts and relationships by the virtual assistant, and (4) the migration of tags across entities based on child-parent relationships. An objective of the representative embodiments disclosed herein is to make the task of human supervision as easy and enjoyable as possible and to progressively reduce the need for human supervision active learning embedded in the system.

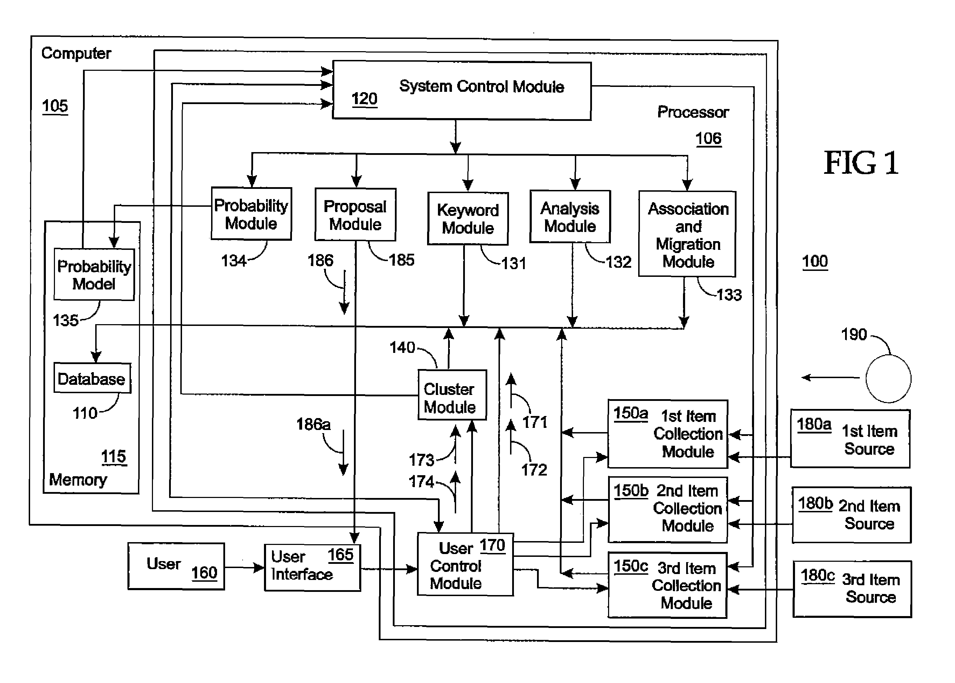

Figure 1 is a block diagram of a system **100** for clustering personal electronically encoded items **190** as described in various representative embodiments. For ease and clarity of illustration only one personal electronically encoded item **190** is shown in Figure 1. In the representative embodiment of Figure 1, the system **100** comprises a computer **105** and a user interface **165** by which a user **160** interacts with the computer **105.** The computer **105** comprises a processor **106** and a memory **115**. In various representative embodiments the physical unit on which the memory **115** is located or other physical units can function as a non-transitory computer-readable medium **115** having computer-executable instructions for causing the computer **105** comprising the processor **106** and associated memory **115** to carry out a method for managing electronically encoded items **190.** The memory **115** comprises a database **110** and a probability model **135.** The processor **106** comprises a system control module **120,** a keyword module **131** also referred to herein as a tagging module **131,** an analysis module **132,** an association and migration module **133,** a probability module **134,** a proposal module **185,** a user control module **170,** a cluster module **140,** and various item collection modules **150** which are also referred to herein as collection modules **150.** In the representative embodiment of Figure 1, the various item collection modules **150** include a first item collection module **150a,** a second item collection module **150b,** and a third item collection module **150c.**

The system control module **120** is coupled to the user control module **170,** the keyword module **131,** the analysis module **132,** the association and migration module **133,** the probability module **134,** the proposal module **185,** and the various collection modules **150.** The database **110** is coupled to the keyword module **131,** the analysis module **132,** the association and migration module **133,** the user control module **170,** the cluster module **140,** and the various item collection modules **150.** The user control module **170** is coupled to the cluster module **140** and to the various item collection modules **150.** The item collection modules **150** are each further coupled to various item sources **180** also referred to herein as sources **180.** For ease and clarity of illustration only three item collection modules **150** (first item collection module **150a,** second item collection module **150b,** and third item collection module **150c)** with each item collection module **150** separately coupled to one of three item sources **180** (first item source **180a,** second item source **180b,** and third item source **180c)** are shown in Figure 1.

The item sources **180** are sources or repositories of various personal electronically encoded items **190** such, for example, as digital photographs **190,** video files **190,** music files **190,** email files **190,** and other written documents **190.** The various item sources **180** could include, for example, a cellular phone **180,** smart cellular phone **180,** laptop computer **180,** tablet **180,** personal computer **180,** digital camera **180,** video camera **180,** and any of various sources of music **180.** The item sources **180** could be coupled to the system **100** by a wireless connection, a wired connection, or by any other appropriate method.

In operation, the system control module **120** and/or the user **160** via the user interface **165** and the user control module **170** instructs the item collection modules **150** to obtain personal electronically encoded items **190** from one or more of the item sources **180.** In alternative configurations, the item sources **180** and/or the item collection modules **150** can initiate the uploading of the personal electronically encoded items **190** to the system **100.** The item collection modules **150** store the personal electronically encoded items **190** in the database **110**.

Once the personal electronically encoded items **190** are retrieved, the keyword module **131** creates and attaches as many keywords as possible automatically to the retrieved personal electronically encoded items **190**. For example, when a user **160** takes a photograph **190** (a personal electronically encoded item **190)** and uploads it into the database **110** of the system **100,** the system **100** can generates several automatic keywords for the resulting photo item such as, for example, by using obvious cues like time which could be from a clock, place, altitude, and motion which could be from the global positioning system (GPS) obtained coordinates, as well as from other more subtle data obtained from sensors which perhaps measure light, humidity, and acceleration, certain camera settings such as exposure and scene type, the number of faces in the photo if any, and the identities of those faces. The ability to recognize faces can be implemented by a specific usage mode of the keyword module **131**, as will be described later. The automatic tagging of keywords reduces the manual tagging efforts necessary by the user. The keyword module **131** can actuate this automatic tagging via autonomous agents designed for specific types of personal electronically encoded items **190**. These autonomous agents register themselves with the database and are continuously active in terms of tagging new or modified entities. These autonomous agents as well as the system **100** can be based in the cloud, on a server, on a personal computer, or on any other appropriate device.

The user **160** via the user interface **165** and the user control module **170** can direct via perspective directives **171** the creation of various perspectives and via album directives **172** the creation of various albums each associated with a selected perspective wherein each perspective and album created is representative of a personal area of user **160** interest which the user **160** identifies. The user **160** can then direct the cluster module **140** to cluster various personal electronically encoded items **190** of the user **160** with the created perspectives. The probability module **134** develops and modifies the probability model **135** based on the user's **160** various actions which are shown, for example as the perspective directive **171**, the album directive **172**, the first clustering directive **173**, and the second clustering directive **174**.

The analysis module **132** analyzes the personal electronically encoded items **190** that have been associated with the previously created perspectives. Based on similarities determined from this analysis, the proposal module **185** can make proposal to the user **160** which are shown in Figure 1 as proposal **186** and additional proposal **186a.** In particular, the proposal module **185** can propose associating a previously unassociated personal electronically encoded item **190** with one of the created perspectives or albums wherein the proposal **186** is based on the probability model **135.** Also, the proposal module **185** can propose the creation of a new perspective, a new album, or a new perspective and a new album associated with that new perspective and the association therewith of one or more of the one or more analyzed personal electronically encoded items **190.**

The association and migration module **133** can respond to a user **160** decision to treat a previously created perspective or a previously created album as an individual entity and associate that entity with a newly created perspective or a newly created album and can then at the user's **160** direction migrate tags from the new perspective or the new album to the associated entity and to the associated personal electronically encoded items **190** of that entity.

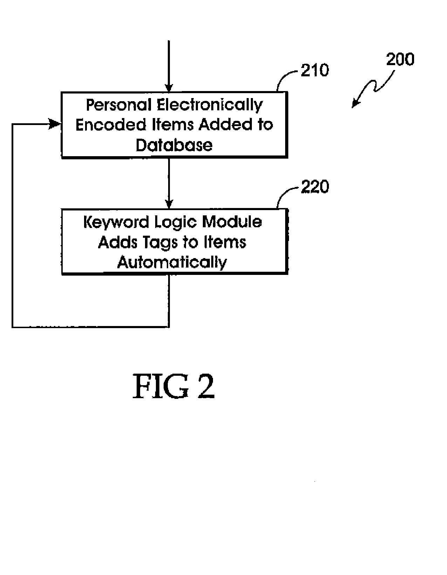

Figure 2 is a flow chart of a method **200** for automatic tagging as described in various representative embodiments. In block **210** of Figure 2, one or more personal electronically encoded items **190** are added to the database **110**. Block **210** then transfers control to block **220.**

In block **220**, the keyword module **131** with any agents operating on its behalf automatically adds tags to the one or more personal electronically encoded items **190.** Block **220** then transfers control back to block **210** and waits for additional personal electronically encoded items **190** to be added to the database **110**.

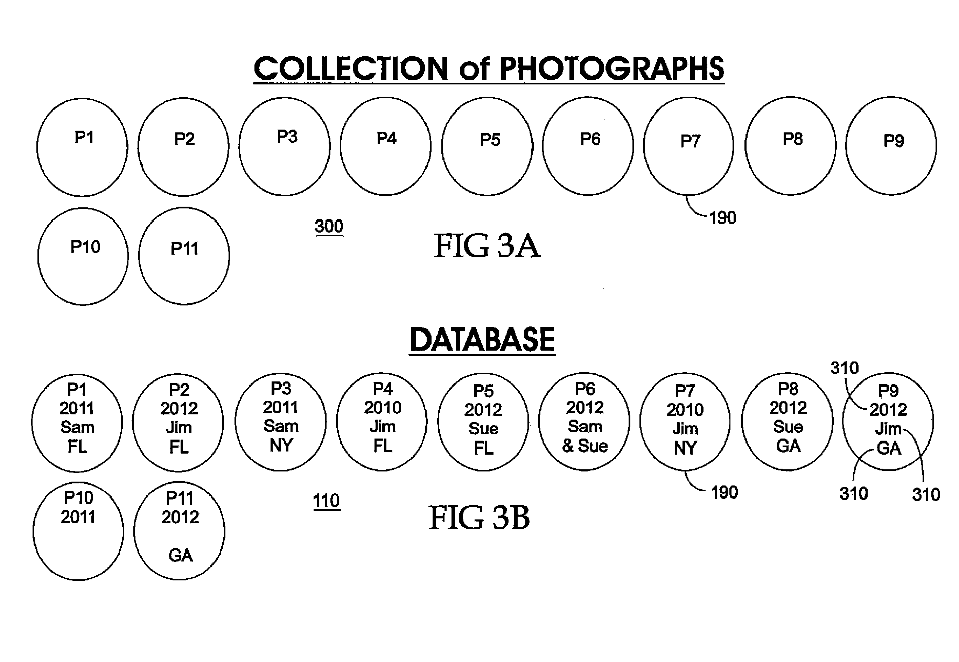

Figure 3A is a drawing of a collection **300** of personal electronically encoded items **190** as described in various representative embodiments. For clarity and ease of illustration, only one of the personal electronically encoded items **190** therein has an identifying number associated with it. The personal electronically encoded items **190** in Figure 3A are photographs **P1**, **P2**, **P3**, **P4**, **P5**, **P6, P7, P8**, **P9**, **P10**, **P11** before uploading into the database **110**.

Figure 3B is a drawing of the database **110** containing the multiple personal electronically encoded items **190** of Figure 3A. Also for clarity and ease of illustration, only three tags **310** or keywords **310** associated with one of the personal electronically encoded items **190** therein have identifying numbers associated with them. In this example, the tags **310** shown are the date tag (2012) **310,** the person tag (Jim) **310**, and the place tag (GA, i.e., Georgia) **310**. The personal electronically encoded items **190** in Figure 3B are the photographs **P1**, ... **P11** after uploading into the database **110** and after automatic tagging by the keyword module **131**.

Tags or labels **310** associated with photograph **P1** are the year 2011 that it was taken, the name of the individual (Sam) in the photograph, and the fact that it was taken somewhere in Florida. Tags or labels **310** associated with photograph **P2** are the year 2012 that it was taken, the name of the individual (Jim) in the photograph, and the fact that it was taken somewhere in Florida. Tags or labels **310** associated with photograph **P3** are the year 2011 that it was taken, the name of the individual (Sam) in the photograph, and the fact that it was taken somewhere in New York. Tags or labels **310** associated with photograph **P4** are the year 2010 that it was taken, the name of the individual (Jim) in the photograph, and the fact that it was taken somewhere in Florida. Tags or labels **310** associated with photograph **P5** are the year 2012 that it was taken, the name of the individual (Sue) in the photograph, and the fact that it was taken somewhere in Florida. Tags or labels **310** associated with photograph **P6** are the year 2012 that it was taken, and the name of the individuals (Sam and Sue) in the photograph. There was no information available to indicate where the photograph **P6** was taken. Tags or labels **310** associated with photograph **P7** are the year 2010 that it was taken, the name of the individual (Jim) in the photograph, and the fact that it was taken somewhere in New York. Tags or labels **310** associated with photograph **P8** are the year 2012 that it was taken, the name of the individual (Sue) in the photograph, and the fact that it was taken somewhere in Georgia. Tags or labels **310** associated with photograph **P9** are the year 2012 that it was taken, the name of the individual (Jim) in the photograph, and the fact that it was taken somewhere in Georgia. The only tag or label **310** associated with photograph **P10** is the year 2011 in which it was taken. No other information was available for automatic tagging. The only tags or labels **310** associated with photograph **P11** are the year 2012 in which it was taken and the name of the individual (Sue) in the photograph.

The above tags or labels **310** could have been obtained from the use of a face recognition module, from GPS data, and from meta data associated with each photograph **190**, and from other appropriate sources. None of it had to necessarily be supplied directly by the user **160,** and as such time and effort required from the user **160** is minimized.

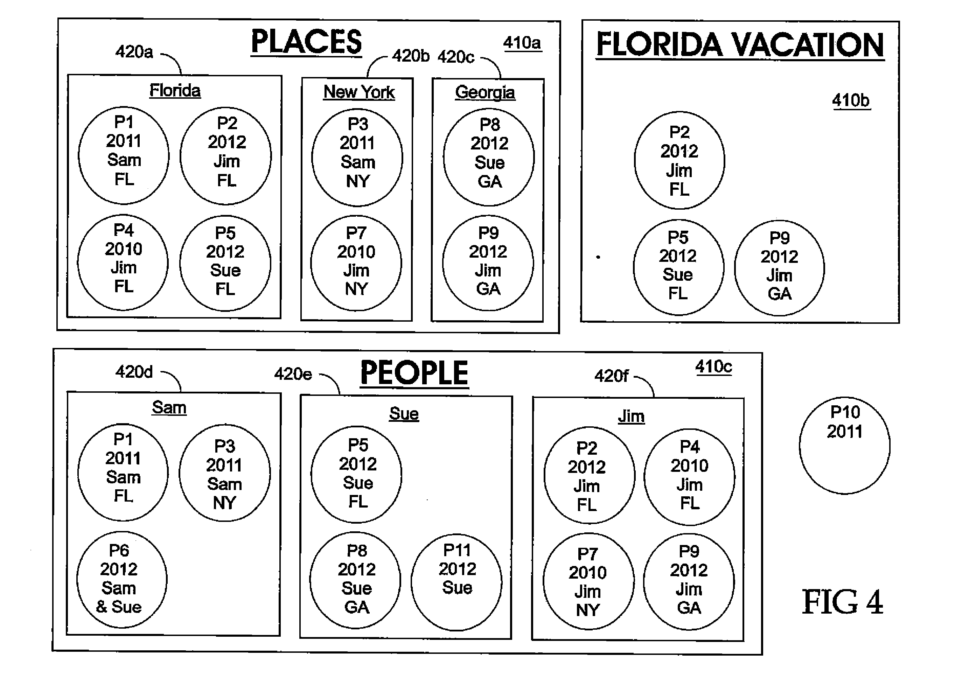

Figure 4 is a block diagram of a result of placement by the user **160** of the personal electronically encoded items **190** of Figure 3B. In obtaining the result of Figure 4, the user **160** gathers the various personal electronically encoded items **190,** i.e., the photographs **190,** into different perspectives **410** as he/she chooses. A perspective **410** is a view of the personal electronically encoded items **190** that the user **160** has chosen to collect together.

In Figure 4, the user **160** has chosen to collect his/her personal electronically encoded items **190** (photographs **P1**... **P11)** into three separate perspectives **410 -** the places perspective **410a,** the Florida vacation perspective **410b**, and the people perspective **410c,** Within the places perspective **410a,** the user **160** has chosen to create three albums **420 -** the Florida album **420a,** the New York album **420b,** and the Georgia album **420c.** Within the people perspective **410c,** the user **160** has chosen to create three separate albums **420 -** the Sam album **420d,** the Sue album **420e,** and the Jim album **420f.**

Note that the Florida album **420a** within the places perspective **410a** includes photograph **P1**, photograph **P2**, photograph **P4,** and photograph **P5;** the New York album **420b** within the places perspective **410a** includes photograph **P3** and photograph **P7;** and the Georgia album **420c**within the places perspective **410a** includes photograph **P8** and photograph **P9**. The Florida vacation perspective **410b** does not include an album **420** but does include photograph **P2.** photograph **P5,** and photograph **P9.** The Sam album **420d** within the people perspective **410c** includes photograph **P1,** photograph **P3,** and photograph **P6;** the Sue album **420e** within the people perspective **410c** includes photograph **P5,** photograph **P8,** and photograph **P11**; and the Jim album **420f** within the people perspective **410c** includes photograph **P2,** photograph **P4,** photograph **P7,** and photograph **P9.** Also, note that the user **160** has chosen not to include photograph **P10** in any of the perspectives **410** or albums **420** since it does not fit into his/her criteria for the created perspectives **410** and albums **420.** In addition, note that the user **160** chose to include photograph **P9** in the Florida vacation perspective **410b** even though photograph **P9** was taken in Georgia not Florida. In this representative example, the user **160** recalled that photograph **P9** was taken of Jim while traveling to Florida for the vacation in 2012. Thus, the user **160** included that photograph in the Florida vacation perspective **410b** even though it was a part of traveling to the vacation and might or might not be considered to be a part of the vacation itself.

Assigning the various personal electronically encoded items **190** to perspectives **410** and albums **420** is similar to the partitioning of a file system into folders. However, an important difference is that each of the items in a collection of items or the collection itself, such as the photographs **P1,** ... **P11**, need not be assigned to a single unique perspective **410.** There can be many perspectives **410** or user views **410** for the photos, in fact as many as the user **160** decides to have. Each perspective **410** is a different way of looking at the same collection of photographs, for example, family vs. school photos or vacation vs. other photos. Such a sorting of items into groups is very intuitive and is one of the first things a child learns.

In order to learn from the user's act of placing these personal electronically encoded items **190** into the various perspectives **410** and albums **420,** the system control module **120** observes the actions which the user **160** has performed. From such information the system control module **120** will be able to create more elaborate personalized keywords **310** for the personal electronically encoded items **190.** In other words, the system control module **120** observes the user's **160** interactions with groups of personal electronically encoded items **190** such as photographs to find cues from which to automatically derive those keywords **310.** This is referred to herein as "guided clustering".

Once the user **160** has created one or more perspectives **410** and optional one or more albums **420,** the system control module **120** uses the user's s **160** preferences to create proposed additions to the perspectives **410** and albums **420.** Thus, it is not necessary for the user **160** to drag or otherwise manually partition all photographs that might be considered a part of a given perspective **410** or album **420** to that perspective **410** or album **420.** The user **160** can manually drag or identify some photographs to some perspectives/albums as exemplars leaving several unclassified. The user **160** can then rely on the rest of the photographs being directed towards the most appropriate perspective/album. The system control module **120** does this by creating the proposed additions to the perspectives **410** and albums **420** based on the user's **160** previous choices. This predictive ability can be based on a probability model **135** that is associated with each perspective **410.** As the user **160** classifies some exemplars, he/she "trains" or adjusts the probability model **135.** This adjustment is made based on "signatures" generated from the attributes of the exemplar photos, like their keywords **310,** as well as their "content" such as pixel values (JPEG files). The probability model **135** then can produce a soft "belief", i.e., a proposal, for each remaining unclassified photograph. These proposals can be communicated to the user **160** via some suitable visual way that encodes a large amount of information regarding the possible classification of all the unlabelled photographs. This visual communication then allows the user to easily pull in more exemplars into various albums.

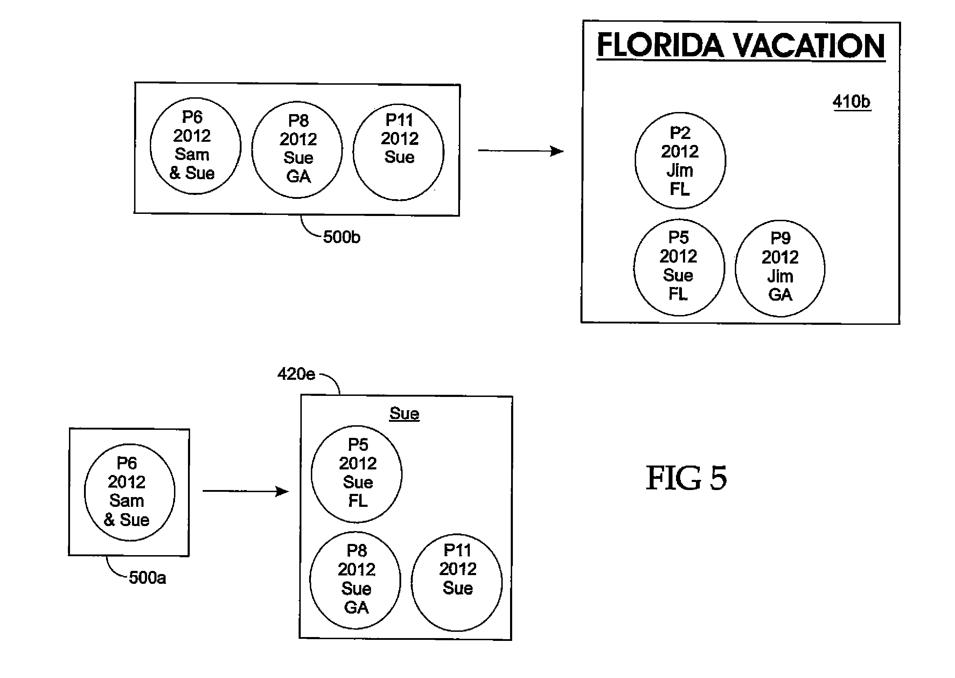

Figure 5 is a block diagram of two proposals **500** created by the system 100 for the perspectives **410** and albums **420** of Figure 4. In the first proposal **500a,** the system control module **120** proposes that photograph **P6** which was taken in 2012 of both Sam and Sue be included in the Sue album **420e** base on the fact that Sue is in photograph **P6.** The user **160** now decides whether or not to include photograph **P6** in the Sue album **420e.** The user **160** could decide to include photograph **P6** in the Sue album **420e** simply because Sue is in that photograph. Or, the user **160** may decide not to include photograph **P6** in the Sue album **420e** because Sue he/she wanted to restrict the Sue album **420e** to only pictures of Sue and no one else.

In the second proposal **500b,** the system control module **120** proposes that photograph **P6** which was taken in 2012 of both Sam and Sue, the photograph **P8** which was taken in 2012 of Sue in Georgia, and the photograph **P11** which was taken in 2012 of Sue be included in the Florida vacation perspective **410b.** The system control module **120** proposed the inclusion of photograph **P6** in the Florida vacation perspective **410b** based on the date (2012) that the photograph was taken and that Sue was included. The user **160** rejects this proposal as he/she knows that Jim and Sue are members of the same family whereas Sam is not and the vacation to Florida was a family vacation not including Sam.

The system control module **120** proposed the inclusion of photograph **P8** in the Florida vacation perspective **410b** based on the date (2012) that the photograph was taken, that Sue was included, and that the photograph was taken in Georgia. The system control module **120** noted that the user **160** had included in the Florida vacation perspective photograph **P9** which was taken also in 2012 in Georgia and that photograph **P5** taken in 2012 of Sue was also included in the Florida vacation perspective photograph **P9.** The user **160** can once again accept or reject this proposal. In this case, the user **160** accepts the proposal as he/she knows that Sue was only in Georgia in 2012 at the same time that Jim was on the way to the vacation to Florida.

The system control module **120** proposes the inclusion of photograph **P11** in the Florida vacation perspective **410b** based on the date (2012) that the photograph was taken and that Sue was included. The system control module **120** noted that the user **160** had included in the Florida vacation perspective photograph **P5** which was taken also in 2012 of Sue. And, the user **160** can again accept or reject this proposal. In this case, the user **160** recognizes that the photograph **P11** was taken near the top of a mountain in New Hampshire not in Florida and chooses to reject the proposal for inclusion in the Florida vacation perspective **410b.**

In addition to monitoring the user's **160** decisions in associating personal electronically encoded items **190** with the various perspectives **410** and albums **420,** the system control module **120** also monitors the decisions made by the user **160** to the proposals **500** that were made. A proposal **500** rejected by the user **160** can be important in modifying the criteria used by the system control module **120** in making proposals, and a proposal **500** accepted by the user **160** can be important by reinforcing the criteria used. As more and more decisions are made regarding the system control module **120** and proposals **500,** more and more of the proposals **500** will more likely be accepted by the user **160** and the user's **160** active supervision of a given perspective **410** should decrease.

The perspectives **410** including any modifications made in response to the system **100** proposals **500** along with any associated probability model **135** is stored in the database **110.** As such the user **160** can stop his/her interaction with a perspective **410** and reload it at a later time. If the system **100** operates in the cloud, the user **160** can also reload the perspective **410** from a different device. At some point the user **160** can give more control to the system **100** regarding specified perspectives **410** such that new photographs added by the user **160** if appropriate will automatically appear in this particular perspective **410** placed in the correct album **420.** At the same time, these new photographs will also appear in all other perspectives **410,** placed appropriately according to their respective trained, probability models **135.**

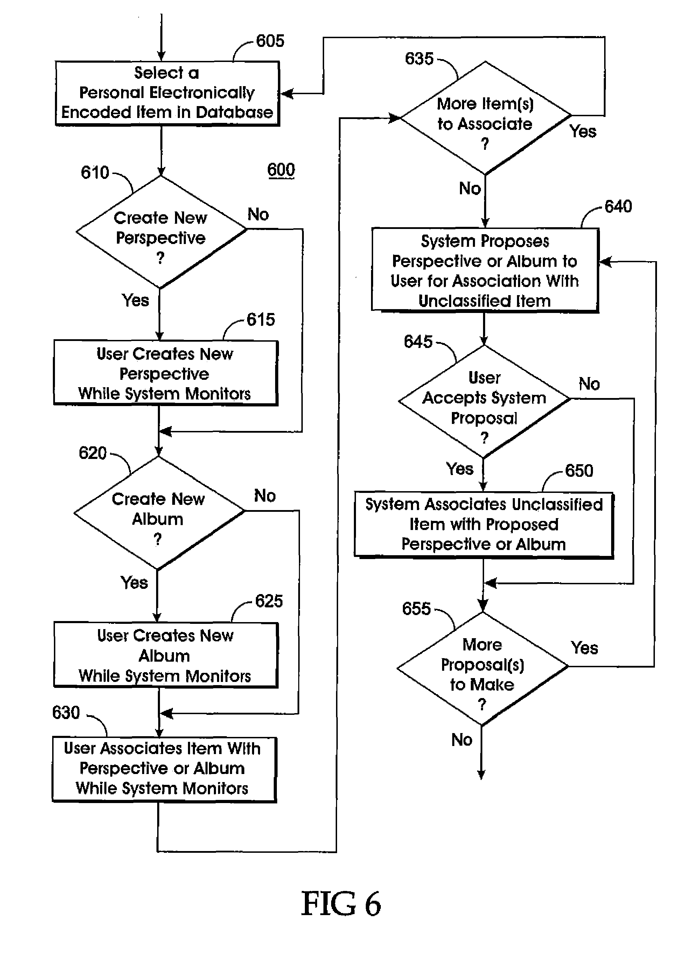

Figure 6 is a flow chart of a method **600** for guided clustering of personal electronically encoded items **190** as described in various representative embodiments. In block **605** of Figure 6, the user **160** selects a personal electronically encoded item **190** from the database **110.** Block **605** then transfers control to block **610.**

In block **610,** if the user **160** wishes to create a new perspective **410** with which to associate the personal electronically encoded item **190,** block **610** transfers control to block **615.** Otherwise block **610** transfers control to block **620.**

In block **615,** the user **160** creates the new perspective **410** while the system **100** monitors the user's **160** action. Block **615** then transfers control to block **620.**

In block **620,** if the user **160** wishes to create a new album **420** with which to associate the personal electronically encoded item **190,** block **620** transfers control to block **625.** Otherwise block **620** transfers control to block **630.**

In block **625,** the user **160** creates the new album **420** while the system **100** monitors the user's **160** action. Block **625** then transfers control to block **630.**

In block **630,** the user **160** associates the personal electronically encoded item **190** with a perspective **410** or an album **420** while the system **100** monitors the user's **160** action. Block **630** then transfers control to block **635.**

In block **635,** if there are more personal electronically encoded item **190** to associate with a perspective **410** or an album **420,** block **635** transfers control back to block **605.** Otherwise block **635** transfers control to block **640.**

In block **640,** based on the user's **160** prior actions which the system **100** has been monitoring, the system **100** proposes a perspective **410** or album **420** to the user **160** with which to associate an unclassified personal electronically encoded item **190.** Block **640** then transfers control to block **645.**

In block **645,** if the user **160** accepts the system's **100** proposal, block **645** transfers control to block **650.** Otherwise block **645** transfers control to block **655.**

In block **650,** the system **100** associates the unclassified personal electronically encoded item **190** with the proposed perspective **410** or album **420** while the system **100** monitors the user's **160** decision. Block **650** then transfers control to block **655.**

In block **655,** if there are more proposals for the system **100** to make, block **655** transfers control back to block **640.** Otherwise block **655** terminates the process.

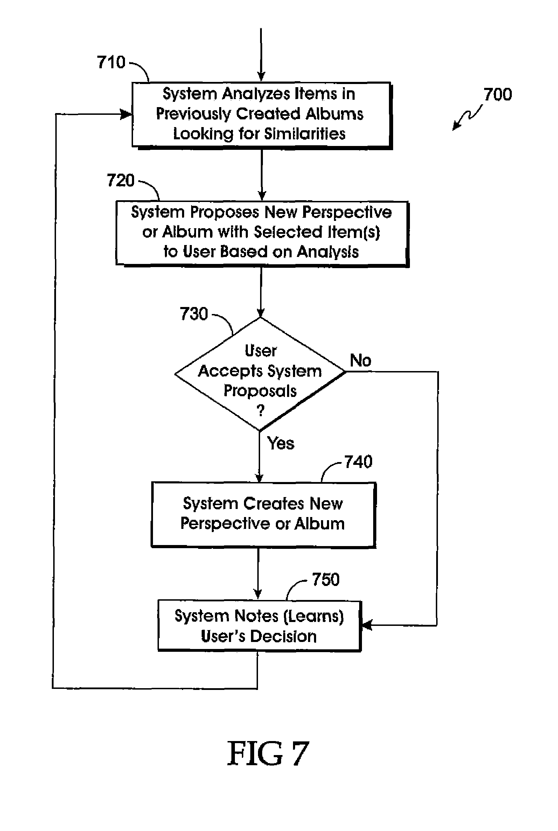

Figure 7 is a flow chart of a method **700** for the discovery of new concepts and relationships by the system **100** as described in various representative embodiments. In block **710** of Figure 7, the system **100** analyzes previously placed personal electronically encoded items **190** and previously created perspectives **410** and albums **420** to discover similarities from which it can propose a new perspective **410** or a new album **420.** This proposal is based not only on these similarities but also on the system's **100** observations of the user's s **160** previous actions and decisions such as with previous placements and can be based on a probability model **135** that the user **160** or system **100** chooses to employ. This probability model **135** could be based on the user's actions as observed by the system **100.** Block **710** then transfers control to block **720.**

In block **720,** the system **100** proposes a new perspective **410** or new album **420** with selected personal electronically encoded items **190** to the user **160.** Block **720** then transfers control to block **730.**

In block **730,** if the user **160** accepts the system's **100** proposal, block **730** transfers control to block **740.** Otherwise block **730** transfers control to block **750.**

In block **740,** the system **100** creates the proposed new perspective **410** or album **420** with selected personal electronically encoded items **190.** Block **740** then transfers control to block **750.**

In block **750,** the system **100** monitors and learns from the user's **160** decision to accept or reject the system's **100** proposal. Block **750** then transfers control back to block **710.**

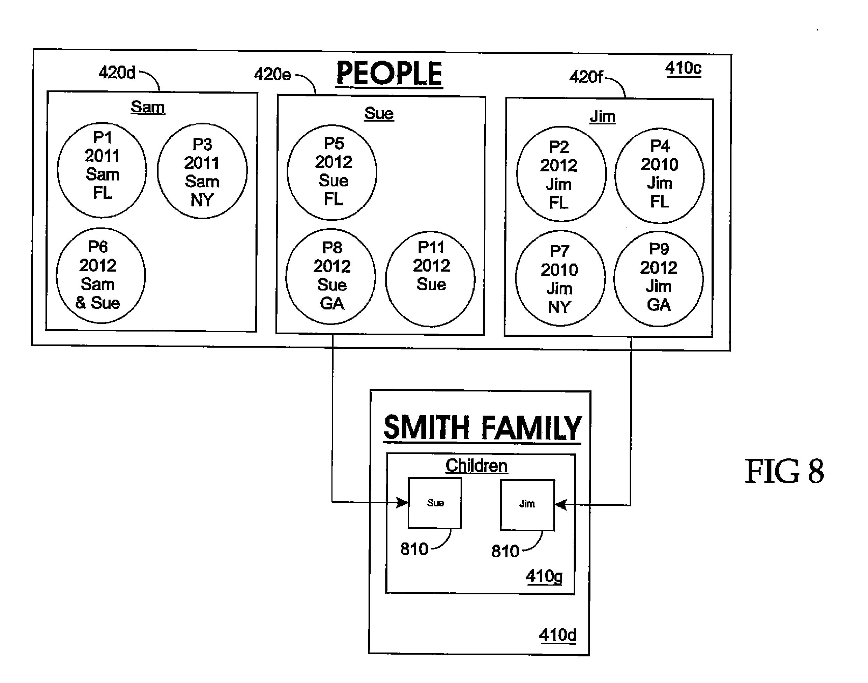

Figure 8 is a block diagram of a result of treating albums **420** of Figure 4 as individual entities **810.** In Figure 8, the Sue album **420e** and the Jim album **420f** of Figure 4 are each treated as a personal electronically encoded item **190** and are separately added as entities **810** to the newly created children album **420g** of the newly created Smith family perspective **410d.** The albums **420** can also be treated as perspectives **410.**

If the user **160** creates a new perspective **410** and albums **420,** the system **100** will monitor this creation and note the fact that the user **160** has one or more new concepts in mind which correspond to the new perspective **410** and to the new albums **420** of that perspective **410.** The system **100** records the fact that the items **190** in an album **420** are "members" of that album **420,** that is, that they have a "belong to" relationship with the concept represented by the album **420.** If, for example, in the representative example of Figure 4 the Sam album **420d,** the Sue album **420e,** and the Jim album **420f** in the people perspective **410c** were restricted to single person photographs only, photograph **P6** would be removed from the Sam album **420d,** and the system **100** will record the fact that the remaining photographs in those albums **420** "belong to" a single person. In other perspectives **410** some of the person albums **420** could be also directly associated with other perspectives **410** such as an occupation group such as physicians or engineers or a family as in Figure 8. Consequently, as indicated in Figure 8, the Sue album **420e** and the Jim album **420f** belong to or are associated with the people perspective **410c** and also to or with the Smith family perspective **410d.**

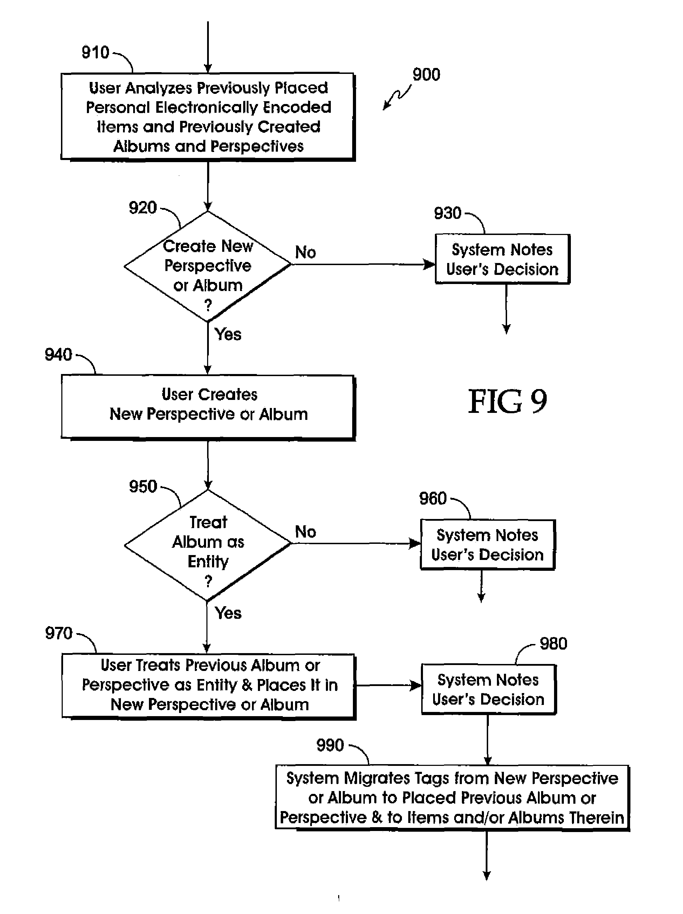

Figure 9 is a flow chart of a method **900** for the migration of tags **310** as described in various representative embodiments. In block **910** of Figure 9, the user **160** analyzes previously placed personal electronically encoded items **190** and previously created perspectives **410** and albums **420** to discover similarities from which he/she can create a new perspective **410** or a new album **420.** Block **910** then transfers control to block **920.**

In block **920,** if the user **160** decides to create a new perspective **410** or a new album **420,** block **920** transfers control to block **940.** Otherwise block **920** transfers control to block **930.**

In block **930,** the system **100** notes the user's **160** decision. As a part of this monitoring process, the system **100** discovers new preferences of the user **160.** Block **930** then terminates the process.

In block **940,** the user **160** creates a new perspective **410** or a new album **420** based on his/her analysis. Block **940** then transfers control to block **950.**

In block **950,** if the user **160** decides to treat a previously created album **420** as an entity, block **950** transfers control to block **970.** Otherwise block **950** transfers control to block **960.**

In block **960,** the system **100** notes the user's **160** decision. As a part of this monitoring process, the system **100** discovers new preferences of the user **160.** Block **960** then terminates the process.

In block **970,** the user **160** treats a previously created album **420** or perspective **410** as an entity **810** and places it in the newly created perspective **410** or album **420.** Block **970** then transfers control to block **980.**

In block **980,** the system **100** notes the user's **160** decision. As a part of this monitoring process, the system **100** discovers new preferences of the user **160.** Block **980** then transfers control to block **990.**

In block **990,** the system **100** migrates tags **310** from the new perspective **410** or new album **420** to the placed previous album **420** or perspective **410** and to the electronically encoded items **190** and/or albums **420** therein. Block **990** then terminates the process.

The system **100** also has the capability of migrating keywords **310** across related entities **810.** Each entity **810,** including each album **420,** can be assigned keywords **310.** Any name which the user **160** assigns to an album **420** is itself just a special case of a keyword **310.** Generally, the keywords **310** of each entity are automatically migrated, i.e., copied to, each of its members if it has any. Thus, in the representative embodiment of Figure 4 the name of the Jim album **420f** will migrate as a keyword **310** to each one of Jim's pictures. The photographs of Jim might not have contained his name as a keyword **310** since the user **160** may have just visually recognized Jim in the photographs and dragged them into the Jim album **420f.** Also, since the Jim album **420f** is also a member of the children album **420g** in the Smith family perspective **410d** (see Figure 8), the name of the Smith family perspective **410d** and the children's album **420g** will also become keywords **310** of Jim's photographs. Thus, a photograph of an individual can acquire social circle keywords **310** such as a family name and other keywords **310** such as occupation keywords **310** even when the user **160** did not explicitly tag that photograph with these criteria.

Conversely, in certain situations, keyword tags **310** can also be automatically migrated from members of an entity **810** such as an album **420** to the entity **810** itself. This "upward" migration should, however, be done sparingly and only after satisfaction of relatively strict criteria, in order to prevent excessive application of keywords **310.** As an example, if most of the photographs **190** in an album **420** were taken on Halloween and were auto tagged as such, e.g. from calendar information about public holidays, then the album **420** itself can be allowed to absorb the keyword **310** "Halloween". Subsequently if a photograph **190** is added to the album **420** that does not have this explicit tag **310,** it will nevertheless acquire the "Halloween" tag **310** by virtue of being a member of its parent album **420.** The upward and sideways migration of tags **310** further helps to populate the personal electronic encoded items **190** with useful keywords **310,** thereby reducing the need for user **160** supervision.

Once extensive keyword **310** tagging has been performed by the above mechanisms, a keyword **310** search on the user's **160** personal electronically encoded items **190** becomes more powerful and meaningful. As an example, if a user **160** wants to recall photographs of a particular concept, he/she can begin by opening a perspective **410** and then performing a rough keyword **310** search for what is wanted. The items **190** returned in response to the search may be numerous with many of then not what was wanted since the query may not have been precise enough. However, it is likely that few will be returned that are what was wanted. These few exemplars can be pulled into an album. After that is accomplished, the system **100** "rearranges" and "re-clusters" the remaining items **190** according to their match to the exemplars. This will immediately improve the quality of the perspective that was created by the query and permit the user **160** to find more exemplars more easily. Finally after a few such iterations, the user **160** will have clustered all the photographs that are needed. In an analogous manner, the user **160** can also develop perspectives **410** to classify personal electronically encoded items **190** across two or more concepts.

In another representative example, the user **160** may wish to create a work book. The user **160** begins by writing a "journal" about some concept such as, for example, a vacation or a conference. The system can then propose photographs that "match" the text of the journal. If the user accepts some of the proposed photographs, they will be treated as exemplars, and the system **100** should then make even better proposals to the user **160,** thereby increasing the productivity of the user **160.** The proposals made by the system **100** can remind the user **160** in unexpected ways which may add to the quality of the journal.

Embodiment 1 is directed to a method **900** for managing electronically encoded items **190** on an electronic device. The method **900** comprises analyzing one or more personal electronically encoded items **190** associated with a previously created perspective **410** or with a previously created album **420** associated with the previously created perspective **410,** where the previously created perspective **410** or the previously created perspective **410** and the previously created album **420** represent personal areas of user **160** interest identified by the user **160,** responsive to a user **160** decision to create a new perspective **410,** a new album **420** associated with one of the previously created perspectives **410,** or a new perspective **410** and a new album **420** associated with the new perspective **410,** creating respectively the new perspective **410,** the new album **420** associated with one of the previously created perspectives **410,** or the new perspective **410** and the new album **420** associated with the new perspective **410,** where the new perspective **410,** the new album **420** associated with one of the previously created perspectives **410,** or the new perspective **410** and the new album **420** associated with the new perspective **410** represent personal areas of user **160** interest identified by the user **160,** and responsive to a user **160** decision to treat the previously created perspective **410** or the previously created album **420** as an individual entity **810,** associating the previously created perspective **410** or the previously created album **420** with the new perspective **410** or with the new album **420** and respectively migrating tags from the new perspective **410** or the new album **420** to the associated previously created perspective **410** or the previously created album **420** and to associated ones of the one or more personal electronically encoded items **190.**

Embodiment 2 is directed to embodiment 1, further comprising modifying a probability model **135** for managing the user's **160** one or more personal electronically encoded items **190** based on the decision to create the new perspective **410** or the new album **420** and on the decision to treat the previously created perspective **410** or the previously created album **420** as individual entities **810.**

Embodiment 3 is directed to embodiment 2, wherein modification of the probability model **135** is performed automatically.

Embodiment 4 is directed to embodiment 1, wherein the one or more personal electronically encoded items **190** are stored in a database **110.**

Embodiment 5 is directed to embodiment 1, further comprising collecting the one or more personal electronically encoded items **190** from one or more sources **180** comprising one or more of a cloud **180,** a cellular phone **180,** a mobile electronic device **180,** a personal computer **180,** the internet **180,** a network **180,** a tablet **180,** a digital camera **180,** a camera **180,** a digital video camera **180,** a video camera **180,** a digital sound recorder **180,** a sound recorder **180,** and a tape recorder **180.**

Embodiment 6 is directed to embodiment 1, wherein the one or more personal electronically encoded items **190** comprise one or more digital photographs **190,** analog photographs **190,** digital videos **190,** analog videos **190,** digitally encoded sound files **190,** analog encoded sound files **190,** written documents **190,** and/or emails **190.**

Embodiment 7 is directed to embodiment 1, further comprising automatically tagging one or more of the one or more personal electronically encoded items **190** with one or more keywords **310.**

Embodiment 8 is directed to s non-transitory computer-readable medium **115** having computer-executable instructions for causing a computer **105** comprising a processor **106** and associated memory **115** to carry out a method **900** for managing electronically encoded items **190,** the method **900** comprising analyzing one or more personal electronically encoded items **190** associated with a previously created perspective **410** or with a previously created album **420** associated with the previously created perspective **410,** where the previously created perspective **410** or the previously created perspective **410** and the previously created album **420** represent personal areas of user **160** interest identified by the user **160,** responsive to a user **160** decision to create a new perspective **410,** a new album **420** associated with one of the previously created perspectives **410,** or a new perspective **410** and a new album **420** associated with the new perspective **410,** creating respectively the new perspective **410,** the new album **420** associated with one of the previously created perspectives **410,** or the new perspective **410** and the new album **420** associated with the new perspective **410,** where the new perspective **410,** the new album **420** associated with one of the previously created perspectives **410,** or the new perspective **410** and the new album **420** associated with the new perspective **410** represent personal areas of user **160** interest identified by the user **160,** and responsive to a user **160** decision to treat the previously created perspective **410** or the previously created album **420** as an individual entity **810,** associating the previously created perspective **410** or the previously created album **420** with the new perspective **410** or with the new album **420** and respectively migrating tags from the new perspective **410** or the new album **420** to the associated previously created perspective **410** or the previously created album **420** and to associated ones of the one or more personal electronically encoded items **190.**

Embodiment 9 is directed to embodiment 8, the method **900** further comprising modifying a probability model **135** for managing the user's **160** one or more personal electronically encoded items **190** based on the decision to create the new perspective **410** or the new album **420** and on the decision to treat the previously created perspective **410** or the previously created album **420** as individual entities **810.**

Embodiment 10 is directed to embodiment 9, wherein modification of the probability model **135** is performed automatically.

Embodiment 11 is directed to embodiment 8, wherein the one or more personal electronically encoded items **190** are stored in a database **110.**

Embodiment 12 is directed to embodiment 8, the method **900** further comprising collecting the one or more personal electronically encoded items **190** from one or more sources **180** comprising one or more of a cloud **180,** a cellular phone **180,** a mobile electronic device **180,** a personal computer **180,** the internet **180,** a network **180,** a tablet **180,** a digital camera **180,** a camera **180,** a digital video camera **180,** a video camera **180,** a digital sound recorder **180,** a sound recorder **180,** and a tape recorder **180.**

Embodiment 13 is directed to embodiment 8, wherein the one or more personal electronically encoded items **190** comprise one or more digital photographs, analog photographs, digital videos, analog videos, digitally encoded sound files, analog encoded sound files, written documents, and/or emails.

Embodiment 14 is directed to embodiment 8, the method **900** further comprising automatically tagging one or more of the one or more personal electronically encoded items **190** with one or more keywords **310.**

Embodiment 15 is directed to a system **100** for managing electronically encoded items **190.** The system **100** comprises a processor and memory including an analysis module **132** configured to analyze one or more personal electronically encoded items **190** associated with a previously created perspective **410** or with a previously created album **420** associated with the previously created perspective **410,** where the previously created perspective **410** or the previously created perspective **410** and the previously created album **420** represent personal areas of user **160** interest identified by the user **160,** a user control module **170** configured in response to a user **160** decision to create a new perspective **410** for creating a new album **420** associated with one of the previously created perspectives **410,** or a new perspective **410** and a new album **420** associated with the new perspective **410,** respectively the new perspective **410,** the new album **420** associated with one of the previously created perspectives **410,** or the new perspective **410** and the new album **420** associated with the new perspective **410,** where the new perspective **410,** the new album **420** associated with one of the previously created perspectives **410,** or the new perspective **410** and the new album **420** associated with the new perspective **410** represent personal areas of user **160** interest identified by the user **160,** and an association and migration module **133** configured in response to a user **160** decision to treat the previously created perspective **410** or the previously created album **420** as an individual entity **810** for associating the previously created perspective **410** or the previously created album **420** with the new perspective **410** or with the new album **420** and for migrating tags from the new perspective **410** or the new album **420** to the associated previously created perspective **410** or the previously created album **420** and to associated ones of the one or more personal electronically encoded items **190.**

Embodiment 16 is directed to embodiment 15, further comprising a probability module **134** configured to modify a probability model **135** for managing the user's **160** one or more personal electronically encoded items **190** based on the decision to create the new perspective **410** or the new album **420** and on the decision to treat the previously created perspective **410** or the previously created album **420** as individual entities **810.**

Embodiment 17 is directed to embodiment 16, wherein modification of the probability model **135** is performed automatically.

Embodiment 18 is directed to embodiment 15, wherein the one or more personal electronically encoded items **190** are stored in a database **110.**

Embodiment 19 is directed to embodiment 15, further comprising a collection module **150** configured to collect the one or more personal electronically encoded items **190** from one or more sources **180** comprising one or more of a cloud **180,** a cellular phone **180,** a mobile electronic device **180,** a personal computer **180,** the internet **180,** a network **180,** a tablet **180,** a digital camera **180,** a camera **180,** a digital video camera **180,** a video camera **180,** a digital sound recorder **180,** a sound recorder **180,** and a tape recorder **180.**

Embodiment 20 is directed to embodiment 15, wherein the one or more personal electronically encoded items **190** comprise one or more digital photographs **190,** analog photographs **190,** digital videos **190,** analog videos **190,** digitally encoded sound files **190,** analog encoded sound files **190,** written documents **190,** and/or emails **190.**

Embodiment 21 is directed to embodiment 15, further comprising a tagging module **130a** configured to automatically tag one or more of the one or more personal electronically encoded items **190** with one or more keywords **310.**

One aspect of this disclosure provides a method for managing electronically encoded items on an electronic device, comprising: analyzing one or more personal electronically encoded items associated with a previously created perspective or with a previously created album associated with the previously created perspective, where the previously created perspective or the previously created perspective and the previously created album represent personal areas of user interest identified by the user; responsive to a user decision to create a new perspective, a new album associated with one of the previously created perspectives, or a new perspective and a new album associated with the new perspective, creating respectively the new perspective, the new album associated with one of the previously created perspectives, or the new perspective and the new album associated with the new perspective, where the new perspective, the new album associated with one of the previously created perspectives, or the new perspective and the new album associated with the new perspective represent personal areas of user interest identified by the user; and responsive to a user decision to treat the previously created perspective or the previously created album as an individual entity, associating the previously created perspective or the previously created album with the new perspective or with the new album and respectively migrating tags from the new perspective or the new album to the associated previously created perspective or the previously created album and to associated ones of the one or more personal electronically encoded items.

Optionally, the method further comprises modifying a probability model for managing the user's one or more personal electronically encoded items based on the decision to create the new perspective or the new album and on the decision to treat the previously created perspective or the previously created album as individual entities.

Optionally, modification of the probability model is performed automatically.

Optionally, the one or more personal electronically encoded items are stored in a database.

Optionally, the method further comprises collecting the one or more personal electronically encoded items from one or more sources comprising one or more of a cloud, a cellular phone, a mobile electronic device, a personal computer, the internet, a network, a tablet, a digital camera, a camera, a digital video camera, a video camera, a digital sound recorder, a sound recorder, and a tape recorder.

Optionally, the one or more personal electronically encoded items comprise one or more digital photographs, analog photographs, digital videos, analog videos, digitally encoded sound files, analog encoded sound files, written documents, and/or emails.

Optionally, the method further comprises automatically tagging one or more of the one or more personal electronically encoded items with one or more keywords.

Another aspect of this disclosure provides a non-transitory computer-readable medium having computer-executable instructions for causing a computer comprising a processor and associated memory to carry out a method for managing electronically encoded items, the method comprising: analyzing one or more personal electronically encoded items associated with a previously created perspective or with a previously created album associated with the previously created perspective, where the previously created perspective or the previously created perspective and the previously created album represent personal areas of user interest identified by the user; responsive to a user decision to create a new perspective, a new album associated with one of the previously created perspectives, or a new perspective and a new album associated with the new perspective, creating respectively the new perspective, the new album associated with one of the previously created perspectives, or the new perspective and the new album associated with the new perspective, where the new perspective, the new album associated with one of the previously created perspectives, or the new perspective and the new album associated with the new perspective represent personal areas of user interest identified by the user; and responsive to a user decision to treat the previously created perspective or the previously created album as an individual entity, associating the previously created perspective or the previously created album with the new perspective or with the new album and respectively migrating tags from the new perspective or the new album to the associated previously created perspective or the previously created album and to associated ones of the one or more personal electronically encoded items.

Optionally, the method further comprises modifying a probability model for managing the user's one or more personal electronically encoded items based on the decision to create the new perspective or the new album and on the decision to treat the previously created perspective or the previously created album as individual entities.

Optionally, modification of the probability model is performed automatically.

Optionally, the one or more personal electronically encoded items are stored in a database.

Optionally, the method further comprises collecting the one or more personal electronically encoded items from one or more sources comprising one or more of a cloud, a cellular phone, a mobile electronic device, a personal computer, the internet, a network, a tablet, a digital camera, a camera, a digital video camera, a video camera, a digital sound recorder, a sound recorder, and a tape recorder.

Optionally, the one or more personal electronically encoded items comprise one or more digital photographs, analog photographs, digital videos, analog videos, digitally encoded sound files, analog encoded sound files, written documents, and/or emails.

Optionally, the method further comprises automatically tagging one or more of the one or more personal electronically encoded items with one or more keywords.

Another aspect of this disclosure provides a system for managing electronically encoded items, comprising: a processor and memory including an analysis module configured to analyze one or more personal electronically encoded items associated with a previously created perspective or with a previously created album associated with the previously created perspective, where the previously created perspective or the previously created perspective and the previously created album represent personal areas of user interest identified by the user; a user control module configured in response to a user decision to create a new perspective for creating a new album associated with one of the previously created perspectives, or a new perspective and a new album associated with the new perspective, respectively the new perspective, the new album associated with one of the previously created perspectives, or the new perspective and the new album associated with the new perspective, where the new perspective, the new album associated with one of the previously created perspectives, or the new perspective and the new album associated with the new perspective represent personal areas of user interest identified by the user; and an association and migration module configured in response to a user decision to treat the previously created perspective or the previously created album as an individual entity for associating the previously created perspective or the previously created album with the new perspective or with the new album and for migrating tags from the new perspective or the new album to the associated previously created perspective or the previously created album and to associated ones of the one or more personal electronically encoded items.

Optionally, the system further comprises a probability module configured to modify a probability model for managing the user's one or more personal electronically encoded items based on the decision to create the new perspective or the new album and on the decision to treat the previously created perspective or the previously created album as individual entities.

Optionally, modification of the probability model is performed automatically

Optionally, the one or more personal electronically encoded items are stored in a database.

Optionally, the system further comprises a collection module configured to collect the one or more personal electronically encoded items from one or more sources comprising one or more of a cloud, a cellular phone, a mobile electronic device, a personal computer, the internet, a network, a tablet, a digital camera, a camera, a digital video camera, a video camera, a digital sound recorder, a sound recorder, and a tape recorder.

Optionally, the one or more personal electronically encoded items comprise one or more digital photographs, analog photographs, digital videos, analog videos, digitally encoded sound files, analog encoded sound files, written documents, and/or emails.

Optionally, the system further comprises a tagging module configured to automatically tag one or more of the one or more personal electronically encoded items with one or more keywords.

The representative embodiments, which have been described in detail herein, have been presented by way of example and not by way of limitation. It will be understood by those skilled in the art that various changes may be made in the form and details of the described embodiments resulting in equivalent embodiments that remain within the scope of the appended claims.

## Claims

1. A method **[900]** for managing electronically encoded items **[190]** on an electronic device **[105],** comprising:
analyzing one or more personal electronically encoded items **[190]** associated with a previously created perspective **[410]** or with a previously created album **[420]** associated with the previously created perspective **[410],** where the previously created perspective **[410]** or the previously created perspective **[410]** and the previously created album **[420]** represent personal areas of user **[160]** interest identified by the user **[160];**
responsive to a user **[160]** decision to create a new perspective **[410],**
a new album **[420]** associated with one of the previously created perspectives **[410],** or a new perspective **[410]** and a new album **[420]** associated with the new perspective **[410],** creating respectively the new perspective **[410],** the new album **[420]** associated with one of the previously created perspectives **[410],** or
the new perspective **[410]** and the new album **[420]** associated with the new perspective **[410],** where the new perspective **[410],** the new album **[420]** associated with one of the previously created perspectives **[410],** or the new perspective **[410]** and the new album **[420]** associated with the new perspective **[410]** represent personal areas of user **[160]** interest identified by the user **[160];** and
responsive to a user **[160]** decision to treat the previously created perspective **[410]** or the previously created album **[420]** as an individual entity **[810],** associating the previously created perspective **[410]** or the previously created album **[420]** with the new perspective **[410]** or with the new album **[420]** and respectively migrating tags from the new perspective **[410]** or the new album **[420]** to the associated previously created perspective **[410]** or the previously created album **[420]** and to associated ones of the one or more personal electronically encoded items **[190].**

2. The method **[900]** as recited in claim 1, further comprising:
modifying a probability model **[135]** for managing the user's **[160]** one or more personal electronically encoded items **[190]** based on the decision to create the new perspective **[410]** or the new album **[420]** and on the decision to treat the previously created perspective **[410]** or the previously created album **[420]** as individual entities **[810].**

3. The method **[900]** as recited in claim 2, wherein modification of the probability model **[135]** is performed automatically.

4. The method **[900]** as recited in claim 1, wherein the one or more personal electronically encoded items **[190]** are stored in a database **[110].**

5. The method **[900]** as recited in claim 1, further comprising:
collecting the one or more personal electronically encoded items **[190]** from one or more sources **[180]** comprising one or more of a cloud **[180],** a cellular phone **[180],** a mobile electronic device **[180],** a personal computer **[180],** the internet **[180],** a network **[180],** a tablet **[180],** a digital camera **[180],** a camera **[180],** a digital video camera **[180],** a video camera **[180],** a digital sound recorder **[180],** a sound recorder **[180],** and a tape recorder **[180].**

6. The method **[900]** as recited in claim 1, wherein the one or more personal electronically encoded items **[190]** comprise one or more digital photographs **[190],** analog photographs **[190],** digital videos **[190],** analog videos **[190],** digitally encoded sound files **[190],** analog encoded sound files **[190],** written documents **[190],** and/or emails **[190].**

7. The method **[900]** as recited in claim 1, further comprising:
automatically tagging one or more of the one or more personal electronically encoded items **[190]** with one or more keywords **[310].**

8. A system **[100]** for managing electronically encoded items **[190],** comprising:
a processor **[106]** and memory **[115]** including an analysis module **[132]** configured to analyze one or more personal electronically encoded items **[190]** associated with a previously created perspective **[410]** or with a previously created album **[420]** associated with the previously created perspective **[410],** where the previously created perspective **[410]** or the previously created perspective **[410]** and the previously created album **[420]** represent personal areas of user **[160]** interest identified by the user **[160];**
a user control module **[170]** configured in response to a user **[160]** decision to create a new perspective **[410]** for creating a new album **[420]** associated with one of the previously created perspectives **[410],** or a new perspective **[410]** and a new album **[420]** associated with the new perspective **[410],** respectively the new perspective **[410],** the new album **[420]** associated with one of the previously created perspectives **[410],** or the new perspective **[410]** and the new album **[420]** associated with the new perspective **[410],**
where the new perspective **[410],** the new album **[420]** associated with one of the previously created perspectives **[410],** or the new perspective **[410]** and the new album **[420]** associated with the new perspective **[410]** represent personal areas of user **[160]** interest identified by the user **[160];** and
an association and migration module **[133]** configured in response to a user **[160]** decision to treat the previously created perspective **[410]** or the previously created album **[420]** as an individual entity **[810]** for associating the previously created perspective **[410]** or the previously created album **[420]** with the new perspective **[410]** or
with the new album **[420]** and for migrating tags from the new perspective **[410]** or the new album **[420]** to the associated previously created perspective **[410]** or the previously created album **[420]** and to associated ones of the one or more personal electronically encoded items **[190].**

9. The system **[100]** as recited in claim 8, further comprising:
a probability module **[134]** configured to modify a probability model **[135]** for managing the user's **[160]** one or more personal electronically encoded items **[190]** based on the decision to create the new perspective **[410]** or the new album **[420]** and on the decision to treat the previously created perspective **[410]** or the previously created album **[420]** as individual entities **[810].**

10. The system **[100]** as recited in claim 9, wherein modification of the probability model **[135]** is performed automatically.

11. The system **[100]** as recited in claim 8, wherein the one or more personal electronically encoded items **[190]** are stored in a database **[110].**

12. The system **[100]** as recited in claim 8, further comprising:
a collection module **[150]** configured to collect the one or more personal electronically encoded items **[190]** from one or more sources **[180]** comprising one or more of a cloud **[180],** a cellular phone **[180],** a mobile electronic device **[180],** a personal computer **[180],** the internet **[180],** a network **[180],** a tablet **[180],** a digital camera **[180],** a camera **[180],** a digital video camera **[180],** a video camera **[180],** a digital sound recorder **[180],** a sound recorder **[180],** and a tape recorder **[180].**

13. The system **[100]** as recited in claim 8, wherein the one or more personal electronically encoded items **[190]** comprise one or more digital photographs **[190],** analog photographs **[190],** digital videos **[190],** analog videos **[190],** digitally encoded sound files **[190],** analog encoded sound files **[190],** written documents **[190],** and/or emails **[190].**

14. The system **[100]** as recited in claim 8, further comprising:
a tagging module **[130a]** configured to automatically tag one or more of the one or more personal electronically encoded items **[190]** with one or more keywords **[310].**
